# EUROPEAN PATENT APPLICATION

(11) **EP 4 579 104 A1**
(43) Date of publication of application: **02.07.2025**
(21) Application number: 23897832.4
(22) Date of filing: 29.11.2023
(51) Int. Cl.: F16H 57/027, H02K 5/10, H02K 7/116

(54) **VEHICULAR DRIVE DEVICE**

(30) Priority: 30.11.2022 JP 2022191022; 15.11.2023 JP 2023194700
(71) Applicant: AISIN CORPORATION, Kariya-shi, Aichi 448-8650 (JP)
(72) Inventor: MUNETO Takuya, Kariya-shi, Aichi 448-8650 (JP); SUZUKI Tomoyuki, Kariya-shi, Aichi 448-8650 (JP)
(74) Representative: Kramer Barske Schmidtchen Patentanwälte PartG mbB
(86) International application number: PCT/JP2023/042747
(87) International publication number: WO 2024/117186

(57) **Abstract**

There is disclosed a vehicular drive device including a transmission mechanism that transmits drive force from a drive source to a wheel, a case that forms a housing chamber that houses the drive source and/or the transmission mechanism along with oil, and a breather provided on the case, in which the breather includes a case-side opening opened to the housing chamber, a vent opening opened to atmosphere, and a breather chamber that communicates with the case-side opening and the vent opening, and the breather chamber includes a first breather chamber formed in the case, and a second breather chamber formed by an insulating member attached to the case in the housing chamber.

## Description

### TECHNICAL FIELD

The present disclosure relates to a vehicular drive device.

### BACKGROUND ART

A technique is known in which, in a vehicular drive device, a breather chamber communicated with an outside of a case is partitioned to a motor housing chamber of the case.

### CITATIONS LIST

### PATENT LITERATURE

Patent Literature 1: JP 2021-170906 A

### SUMMARY OF INVENTION

### TECHNICAL PROBLEMS

However, in the conventional technique as described above, a breather recess (breather chamber) is closed by a flat breather plate, and in a case where capacity of the breather chamber is increased, the case may be increased in size along with an increase in size of the breather recess.

Accordingly, in one aspect, the present disclosure intends to efficiently secure a necessary capacity of a breather chamber while preventing an increase in size of a case.

### SOLUTIONS TO PROBLEMS

In one aspect, a vehicular drive device includes
a transmission mechanism that transmits drive force from a drive source to a wheel;
a case that forms a housing chamber that houses at least either the drive source or the transmission mechanism along with oil; and
a breather provided on the case, in which
the breather includes
a case-side opening opened to the housing chamber,
a vent opening opened to atmosphere, and
a breather chamber that communicates with the case-side opening and the vent opening,
the breather chamber includes
a first breather chamber formed in the case, and
a second breather chamber formed by an insulating member attached to the case.

### ADVANTAGEOUS EFFECTS OF INVENTION

In one aspect, according to the present disclosure, it is possible to efficiently secure necessary capacity of the breather chamber while preventing an increase in size of a case.

### BRIEF DESCRIPTION OF DRAWINGS

FIG. 1 is a schematic top view showing a state of a vehicular drive device mounted on a vehicle.
FIG. 2 is a cross-sectional view of the vehicular drive device.
FIG. 2A is a skeleton diagram illustrating the vehicular drive device.
FIG. 3 is a top view schematically showing a vehicular drive device according to a first embodiment.
FIG. 3A is a side view from an axial direction first side A1, schematically showing the vehicular drive device according to the first embodiment.
FIG. 4 is a perspective view of a channel forming member.
FIG. 5 is an enlarged view of a portion Q6 in FIG. 2.
FIG. 6 is a side view from an axial direction second side A2, schematically showing the vehicular drive device according to the first embodiment.
FIG. 7 is a schematic cross-sectional view of the vehicular drive device, taken along a vertical plane passing through a breather according to the first embodiment.
FIG. 8 is a schematic cross-sectional view of a vehicular drive device, taken along a vertical plane passing through a breather according to a second embodiment.
FIG. 9 is a side view from an axial direction first side A1, schematically showing a partition wall in the vehicular drive device according to the second embodiment.
FIG. 10 is an enlarged view of a portion Q10 in FIG. 8.
FIG. 11 is a perspective view of a state of an insulating member as a single part, as viewed from the axial direction first side A1.
FIG. 12 is an exploded perspective view of the insulating member in FIG. 11.
FIG. 13 is a perspective view of a state of the insulating member as a single part, as viewed from the axial direction second side A2.
FIG. 14 is a schematic cross-sectional view of a vehicular drive device, taken along a vertical plane passing through a breather according to a comparative example.

### DESCRIPTION OF EMBODIMENTS

Hereinafter, each embodiment will be described in detail with reference to the accompanying drawings. Note that the dimension ratios in the drawings are merely examples, and the dimensional ratios are not limited thereto, and shapes and the like in the drawings may be partially exaggerated for convenience of description. Furthermore, in the drawings, only some of a plurality of parts having the same attribute may be denoted by reference signs for the sake of clarity.

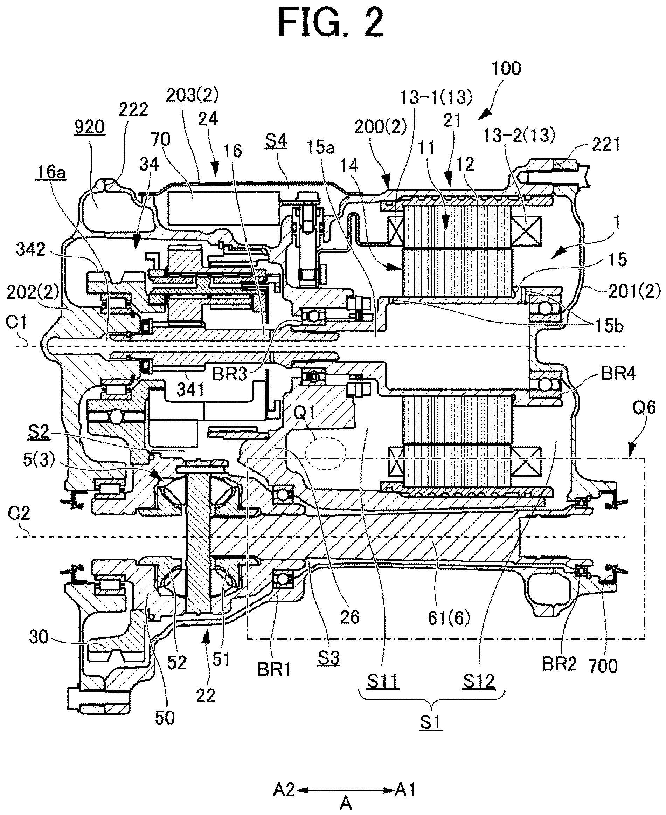

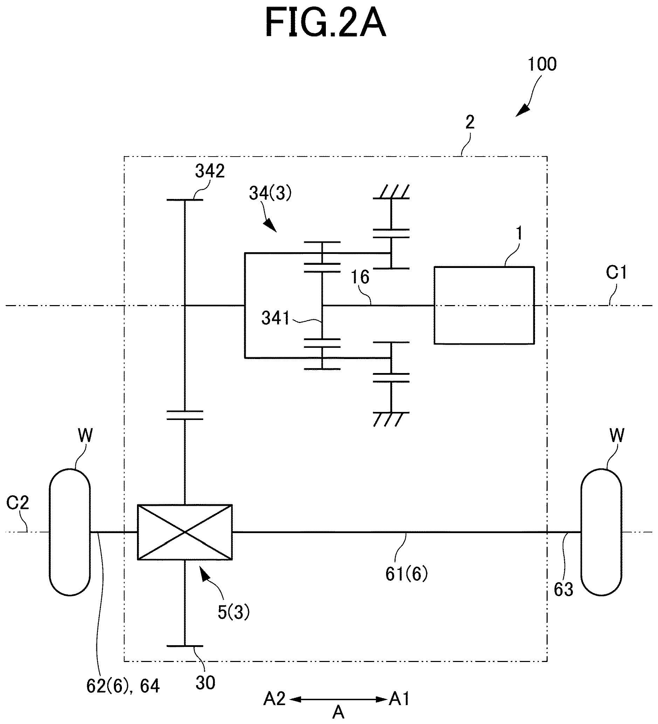

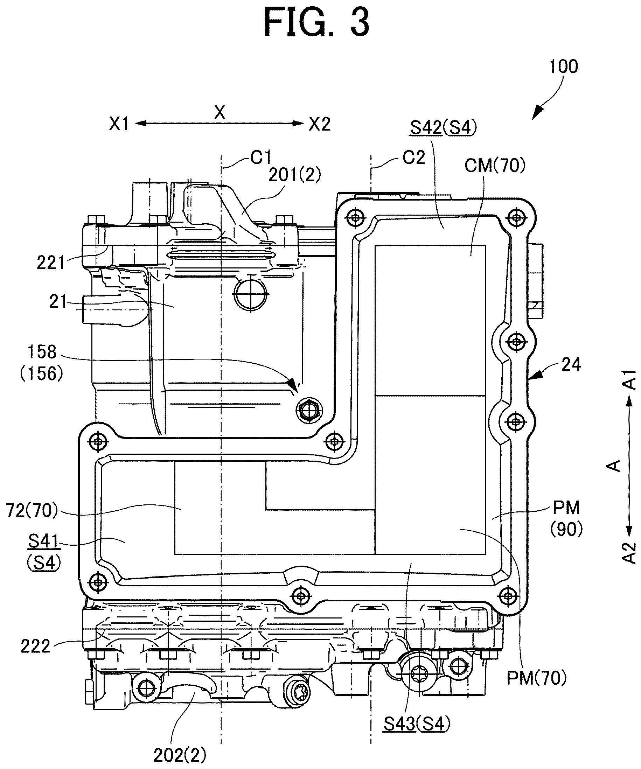

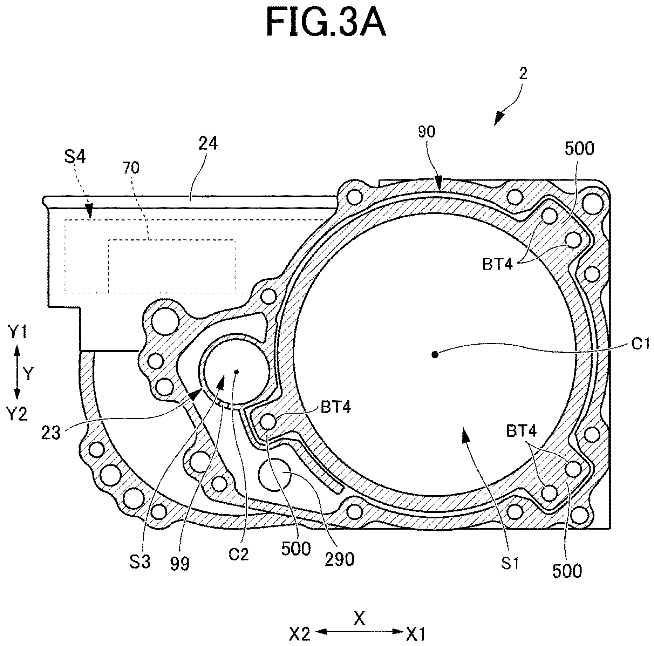

In the following description, a Y direction (refer to FIG. 3A and the like) correspond to an up-down direction in a state where a vehicular drive device 100 is in use, that is, an up-down direction with respect to an orientation in which the vehicular drive device 100 in use is disposed. Then, a Y1 side and a Y2 side correspond to an upper side and a lower side along the Y direction. Note that the up-down direction is not necessarily parallel to a vertical direction, and it is only required that a vertical direction component is predominant. Furthermore, orientations of respective members in the following description represent orientations in a state where the respective members are fitted to the vehicular drive device 100. Furthermore, terms related to dimensions, disposition orientation, disposition position, and the like of each member are concepts including a state of those having a difference due to an error (an allowable error in manufacturing). An A direction (refer to FIG. 2 and the like) corresponds to an axial direction, and an A1 side and an A2 side along the A direction are defined in FIG. 2 and the like. Furthermore, an X direction (refer to FIG. 3 and the like) is a direction orthogonal to both the A direction and the Y direction, and an X1 side and an X2 side along the X direction are defined in FIG. 3 and the like.

In the present specification, "drivingly coupled" state refers to a state in which two rotational elements are coupled so as to be able to transmit drive force (synonymous with torque), and includes a state in which the two rotational elements are coupled so as to rotate integrally, or a state in which the two rotational elements are coupled so as to be able to transmit drive force via one or more transmission members. Such a transmission member includes various members (for example, a shaft, a gear mechanism, a belt, a chain, and the like) that transmit rotation at the same speed or at a different speed. Note that an engagement device (for example, a friction engagement device, a meshing engagement device, or the like) that selectively transmits rotation and drive force may be included as the transmission member.

Furthermore, in the present specification, "communication" refers to a state in which two spatial elements in fluid communication with each other. That is, "communication" refers to a state in which fluid can move back and forth between the two spatial elements. In this case, the two spatial elements may communicate directly or indirectly (that is, via another spatial element).

In the present specification, the "rotating electrical machine" is used as a concept including any of a motor (electric motor), a generator (generator), and a motor-generator that functions as both the motor and the generator as necessary. Furthermore, in the present specification, with respect to arrangement of two members, "to overlap as viewed in a specific direction" means that, in a case where a virtual straight line parallel to the direction of a line of sight is moved in each direction orthogonal to the virtual straight line, a region where the virtual straight line intersects both of the two members exists in at least a part. Furthermore, in the present specification, with respect to arrangement of two members, "disposition regions in a specific direction overlap" means that at least a part of a disposition region in a specific direction of one member is included in a disposition region in a specific direction of another member.

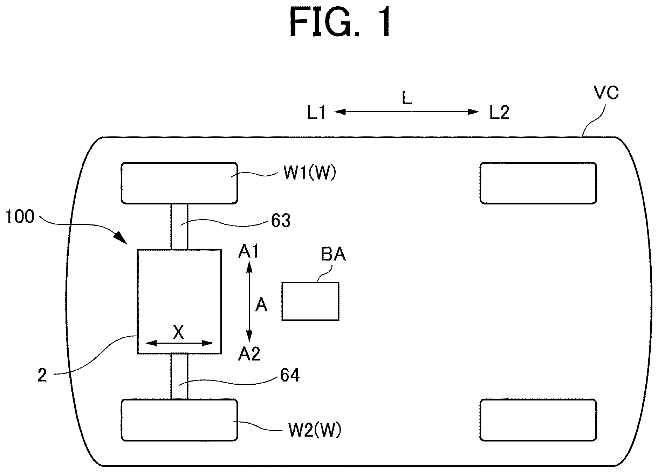

FIG. 1 is a schematic top view showing a state of the vehicular drive device 100 mounted on a vehicle VC. FIG. 2 is a cross-sectional view of the vehicular drive device 100. FIG. 2A is a skeleton diagram showing the vehicular drive device 100.

As schematically shown in FIG. 2A, the vehicular drive device 100 includes a rotating electrical machine 1, a pair of output members 6 drivingly coupled to a pair of wheels W (refer to FIG. 1), and a transmission mechanism 3 that transmits drive force between the rotating electrical machine 1 and the pair of output members 6. The vehicular drive device 100 further includes a case 2 that houses the rotating electrical machine 1. The case 2 also houses the pair of output members 6 and the transmission mechanism 3. Note that, in a modification, the case 2 may house only one (a first output member 61, for example) of the pair of output members 6. Furthermore, application of the vehicular drive device 100 is applicable to any vehicle having the rotating electrical machine 1, such as an electric vehicle or a hybrid vehicle, and is applicable to any vehicle with a drive system such as a front wheel drive or a rear wheel drive. Furthermore, a drive source may be only an engine (internal combustion engine).

A first output member 61, which is one of the pair of output members 6, is drivingly coupled to a first wheel W1, which is one of the pair of wheels W. A second output member 62, which is another one of the pair of output members 6, is drivingly coupled to a second wheel W2, which is another one of the pair of wheels W. As shown in FIG. 1, the vehicle VC on which the vehicular drive device 100 is mounted includes a first drive shaft 63 that rotates integrally with the first wheel W1 and a second drive shaft 64 that rotates integrally with the second wheel W2. The first drive shaft 63 is coupled to the first wheel W1 via, for example, a constant-velocity joint, and the second drive shaft 64 is coupled to the second wheel W2 via, for example, a constant-velocity joint. Then, the first output member 61 is coupled to the first drive shaft 63 so as to rotate integrally with the first drive shaft 63, and the second output member 62 is coupled to the second drive shaft 64 so as to rotate integrally with the second drive shaft 64. Note that the first output member 61 may be in a form of an intermediate shaft. The first output member 61 is rotatably supported with respect to the case 2 via a bearing BR1 on an axial direction second side A2, and is rotatably supported with respect to the case 2 via a bearing BR2 on an axial direction first side A1. Note that, in the present embodiment, as an example, the bearings BR1 and BR2 are in a form of ball bearing. However, the bearings BR1 and BR2 may be in another form.

The vehicular drive device 100 transmits output torque of the rotating electrical machine 1 to the pair of wheels W via the pair of output members 6 to cause the vehicle VC equipped with the vehicular drive device 100 to travel. That is, the rotating electrical machine 1 is a drive force of the pair of wheels W. The pair of wheels W is a pair of left and right wheels (for example, a pair of left and right front wheels or a pair of left and right rear wheels) in the vehicle VC. The rotating electrical machine 1 may be, for example, an alternating-current rotating electrical machine driven by three-phase alternating current power.

As shown in FIG. 2, the rotating electrical machine 1 and the pair of output members 6 are disposed separately on two axes (specifically, a first axis C1 and a second axis C2) parallel to each other. Specifically, the rotating electrical machine 1 is disposed on the first axis C1, and the pair of output members 6 is disposed on the second axis C2 different from the first axis C1. The first axis C1 and the second axis C2 are axes (virtual axes) arranged parallel to each other. The transmission mechanism 3 includes an output gear (ring gear) 30 drivingly coupled to at least one of the pair of output members 6, coaxially with the pair of output members 6 (that is, on the second axis C2).

The rotating electrical machine 1 is, for example, inner rotor type. In the rotating electrical machine 1, a rotor 14 that is rotatable about the first axis C1 is disposed radially inner side of a stator 11 (refer to FIG. 2).

The rotor shaft 15 of the rotor 14 is rotatably supported with respect to the case 2 via a bearing BR3 on an axial direction second side A2, and is rotatably supported with respect to the case 2 via a bearing BR4 on an axial direction first side A1. Note that, in the present embodiment, as an example, the bearings BR3 and BR4 are in a form of ball bearing. However, the bearings BR1 and BR2 may be in another form. Note that, in the example shown in FIG. 2, the rotor shaft 15 has the shaft center oil passage 15a and an ejection vent 15b in a radial direction, and, during rotation, can eject oil in a shaft center oil passage 15a from each ejection vent 15b in the radial direction toward a coil end 13 by centrifugal force.

The transmission mechanism 3 includes a deceleration mechanism 34 in a power transmission path between the rotating electrical machine 1 and an output gear 30. The deceleration mechanism 34 is arbitrary, and may include a deceleration mechanism using a counter gear, a deceleration mechanism using a planetary gear, and the like. In the present embodiment, as an example, the deceleration mechanism 34 includes a planetary gear mechanism, and the deceleration mechanism 34 is disposed coaxially with the rotating electrical machine 1. An output gear (carrier) 342 of the deceleration mechanism 34 meshes with the output gear 30 of a differential gear mechanism 5 in a radial direction. Such a vehicular drive device 100 can have a compact configuration including two axes (the first axis C1 and the second axis C2). Note that, in a modification, the vehicular drive device 100 may have three or more axes.

In the present embodiment, the deceleration mechanism 34 is disposed coaxially with the rotating electrical machine 1 (that is, on the first axis C1) in such a manner as to be drivingly coupled to the rotating electrical machine 1. In the present embodiment, as an example, the rotor 14 of the rotating electrical machine 1 rotates integrally with an input member 16 together with a sun gear 341 of the deceleration mechanism 34.

Furthermore, the transmission mechanism 3 further includes the differential gear mechanism 5. The differential gear mechanism 5 distributes the drive force transmitted from a rotating electrical machine 1 side to the pair of output members 6. In the example shown in FIG. 2, the differential gear mechanism 5 distributes rotation of the output gear 30 to a first side gear 51 and a second side gear 52. The differential gear mechanism 5 may be disposed coaxially with the pair of output members 6 (that is, on the second axis C2). Note that the differential gear mechanism 5 may be a bevel-gear type differential gear mechanism, and the output gear 30 may be coupled to a differential case part 50 so as to rotate integrally with the differential case part 50 included in the differential gear mechanism 5.

Next, a configuration of the case 2 will be described in detail with reference to FIGS. 2 and 3.

FIG. 3 is a top view schematically showing the vehicular drive device 100 according to the present embodiment. In FIG. 3, an inverter cover member 203 on an upper portion of an inverter case part 24 is not shown so that elements disposed inside the inverter case part 24 can be seen.

In the present embodiment, the case 2 includes a motor case part 21, a transmission mechanism case part 22, an output shaft case part 23, and an inverter case part 24 in an integrated form. Here, the "integrated form" includes an integrated form using a fastening member such as a bolt and an integrated form utilizing integral molding (for example, casting or pouring utilizing aluminizing or the like).

The motor case part 21 forms the motor housing chamber S1 that houses the rotating electrical machine 1, the transmission mechanism case part 22 forms a transmission mechanism housing chamber S2 that houses the transmission mechanism 3, the output shaft case part 23 forms the output shaft housing chamber S3 that houses the first output member 61, and the inverter case part 24 forms an inverter housing chamber S4 that houses the inverter device 70. Note that the motor case part 21 forming the motor housing chamber S1 means that a wall part that bounds the motor housing chamber S1 forms the motor case part 21. A similar applies to the transmission mechanism housing chamber S2, the output shaft case part 23, and the inverter case part 24.

The motor case part 21 has a cylindrical shape corresponding to an outer shape of the rotating electrical machine 1. However, an entire cylindrical outer peripheral part of the motor case part 21 is not necessarily closed. For example, the motor housing chamber S1 and the output shaft housing chamber S3 may communicate with each other, and in this case, a wall part (partition wall part) may not be formed on a side of the motor case part 21, the side facing the output shaft housing chamber S3.

The transmission mechanism case part 22 is provided on the axial direction second side A2 with respect to the motor case part 21 and the output shaft case part 23. The output shaft case part 23 is provided on the X2 side in the X direction with respect to the motor case part 21. The inverter case part 24 is provided on the upper side of the transmission mechanism case part 22 and the output shaft case part 23. Details of the inverter case part 24 will be described later.

In the present embodiment, the output shaft case part 23 is provided. Therefore, the first output member 61 can be effectively protected from an external environment (for example, a splashing stone or the like) as compared with a case where the first output member 61 is provided outside the case 2. Furthermore, clearance to be secured between the first output member 61 and peripheral components can be reduced. However, in a modification, the first output member 61 may be provided outside the case 2.

Note that the case 2 may be formed by joining a plurality of members (a case member and a cover member). Therefore, one case member forming the case 2 may form two or more case parts of the motor case part 21, the transmission mechanism case part 22, the output shaft case part 23, and the inverter case part 24.

Furthermore, the motor housing chamber S1, the transmission mechanism housing chamber S2, the output shaft housing chamber S3, and the inverter housing chamber S4 formed by the case 2 may be completely isolated from each other, may partially communicate with each other, or may be shared without borders. For example, the motor housing chamber S1 and the output shaft housing chamber S3 may be shared without a partition wall partitioning the motor housing chamber S1 and the output shaft housing chamber S3. In this case, the rotating electrical machine 1 and the first output member 61 are housed in a common housing chamber (specifically, the motor housing chamber S1 and the output shaft housing chamber S3) formed by the case 2. Note that, in the present embodiment, oil is supplied to the motor housing chamber S1. Therefore, the motor housing chamber S1 and the inverter housing chamber S4 may be partitioned.

In the following description, as an example, the case 2 is formed by joining a case member 200, the motor cover member 201, a differential cover member 202, and an inverter cover member 203. Note that a joining method may be fastening with bolts or the like.

The case member 200 may be formed as one piece of member (for example, one member formed by a die-casting method and having a common material). In this case, the motor housing chamber S1 and the transmission mechanism housing chamber S2 may be partitioned by one partition wall 26.

The case member 200 is opened in the axial direction on the axial direction first side A1 and is opened in the axial direction on the axial direction second side A2.

The motor cover member 201 is provided so as to cover an opening on the axial direction first side A1 in the case member 200 (that is, an opening on the axial direction first side A1 in the motor housing chamber S1). The motor cover member 201 may be formed as one piece of member. The motor cover member 201 may be joined to an end surface (joint surface) on the axial direction first side A1 of the case member 200. In this case, a joint surface (mating surface) 221 between the motor cover member 201 and the case member 200 may extend in a plane perpendicular to the axial direction.

The differential cover member 202 is provided so as to cover an opening on the axial direction second side A2 in the case member 200 (that is, an opening on the axial direction second side A2 in the transmission mechanism housing chamber S2). The differential cover member 202 may be formed as one piece of member. The differential cover member 202 may be joined to an end surface (joint surface) on the axial direction second side A2 of the case member 200. In this case, a joint surface (mating surface) 222 between the differential cover member 202 and the case member 200 may extend in a plane perpendicular to the axial direction.

The inverter cover member 203 is provided so as to cover an opening of the inverter housing chamber S4 in the case member 200. The inverter cover member 203 may be formed as one piece of member.

The inverter device 70 may be in a form of a module, and may be fixed to a wall part forming the inverter case part 24 by bolts or the like.

As described above, the inverter device 70 is housed in the inverter housing chamber S4 of the inverter case part 24. The inverter device 70 receives power supply from a battery BA (refer to FIG. 1) and supplies power to the rotating electrical machine 1. Note that the battery BA is arbitrary, but may be a high-voltage battery having a relatively high rated voltage, a lithium ion battery, or the like. The inverter device 70 mainly includes a power module PM, a smoothing capacitor CM, and a busbar structure 72. Furthermore, the inverter device 70 may further include a control board (not shown) equipped with a control device for controlling an inverter circuit. The busbar structure 72 is disposed between the rotating electrical machine 1 and the power module PM and electrically connects the rotating electrical machine 1 and the power module PM.

In the present embodiment, the inverter case part 24 is disposed so as to overlap the first axis C1 and the second axis C2 as viewed from top (viewed in a second direction Y, hereinafter the same).

The inverter housing chamber S4 includes a first housing part S41, a second housing part S42, and a third housing part S43. As shown in FIG. 3, the inverter housing chamber S4 has an L shape as viewed from top. Specifically, when a space between the first axis C1 and the second axis C2 in the X direction is defined as a center in the X direction, the inverter housing chamber S4 extends on both sides of the X direction with respect to the center in the X direction in a manner of extending across the center in the X direction. Furthermore, when a space between the rotating electrical machine 1 and the deceleration mechanism 34 in the A direction is defined as a center in the A direction, on a first direction second side X2, the inverter housing chamber S4 extends on both sides of the A direction with respect to the center in the A direction in a manner of extending across the center in the A direction. On the other hand, on a first direction first side X1, the inverter housing chamber S4 extends only on the axial direction second side A2 of the center in the A direction.

More specifically, as shown in FIG. 3, the first housing part S41, the second housing part S42, and the third housing part S43 are arranged in an L shape as a whole as viewed from top. At this time, the first housing part S41 overlaps the first axis C1 (that is, the deceleration mechanism 34) on the axial direction second side A2 as viewed from top, and overlaps the rotating electrical machine 1 as viewed in the axial direction A. Furthermore, the second housing part S42 overlaps the second axis C2 as viewed from top and overlaps the rotating electrical machine 1 as viewed in the first direction X. The third housing part S43 is adjacent to the first housing part S41 and the second housing part S42 and overlaps the second axis C2 as viewed from top. Note that the third housing part S43 may integrally communicate with the first housing part S41 and the second housing part S42.

The first housing part S41, the second housing part S42, and the third housing part S43 are disposed above a plane (not shown) including the first axis C1 that is an axial center of a rotary shaft of the rotating electrical machine 1 and the second axis C2 that is an axial center of the output members 6. Note that, in the present embodiment, as described above, an amount of offset in the second direction Y between a central axis of the output gear 30 (that is, the second axis C2) and a central axis of the rotating electrical machine 1 (that is, the first axis C1) is set to be relatively small. Therefore, a plane (not shown) including the first axis C1 and the second axis C2 is a plane close to a horizontal plane.

In the present embodiment, among components of the inverter device 70, the busbar structure 72 may be disposed in the first housing part S41, the smoothing capacitor CM may be disposed in the second housing part S42, and the power module PM may be disposed in the third housing part S43. At this time, the busbar structure 72 and the power module PM are adjacent to each other in the first direction X, and the power module PM and the smoothing capacitor CM are adjacent to each other in the axial direction A. Note that boundaries of the first housing part S41, the second housing part S42, and the third housing part S43 do not need to be specific, and for example, a portion of the power module PM in the axial direction first side A1 may be disposed in the second housing part S42, and a portion of the power module PM in the first direction first side X1 may be disposed in the first housing part S41.

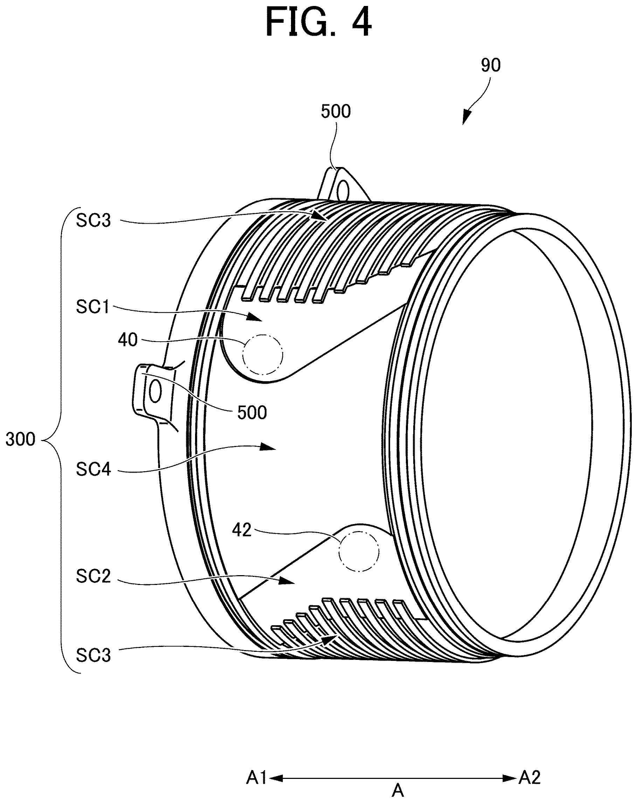

Next, a water-cooling structure of the rotating electrical machine 1 according to the present embodiment and components (a channel forming member 90 and the like) related thereto will be described with reference to FIG. 3A and FIG. 4.

FIG. 3Ais a side view from the axial direction first side A1, schematically showing the vehicular drive device according to the present embodiment. In FIG. 3A, the motor cover member 201 is not shown so that a state of an inside of the motor housing chamber S1 can be seen. Furthermore, in FIG. 3A, an inverter device 70 inside an inverter case part 24 is schematically shown by a dotted line. FIG. 4 is a perspective view of the channel forming member 90.

The water-cooling structure of the rotating electrical machine 1 according to the present embodiment is a structure for cooling the rotating electrical machine 1 with cooling water. Note that the cooling water may be, for example, water containing long life coolant: LLC, and may be circulated by a water pump (not shown). Note that a heat radiation unit such as a radiator (not shown) may be provided in the circulation path of the cooling water. Furthermore, the cooling water may be utilized not only for cooling the rotating electrical machine 1 but also for cooling another component, for example, the inverter device 70 or the like electrically connected to the rotating electrical machine 1.

The water-cooling structure of the rotating electrical machine 1 according to the present embodiment includes a refrigerant supply unit 40, a refrigerant discharge unit 42, and a channel forming member 90.

The refrigerant supply unit 40 communicates with, for example, a discharge side of the water pump (not shown), and supplies the cooling water to the refrigerant channel 300 formed by the channel forming member 90.

The refrigerant discharge unit 42 communicates with, for example, a suction side of the water pump (not shown), and supplies (discharges) the cooling water from the refrigerant channel 300 formed by the channel forming member 90 to the water pump (not shown).

Note that the refrigerant supply unit 40 and the refrigerant discharge unit 42 may be provided on upper and lower sides with the first output member 61 interposed therebetween. In this case, the refrigerant supply unit 40 and the refrigerant discharge unit 42 can be established by effectively utilizing space around the first output member 61.

As shown in FIG. 4, the channel forming member 90 has a cylindrical shape having an inner peripheral surface radially facing an outer peripheral surface of the rotating electrical machine 1. The channel forming member 90 forms the refrigerant channel 300 around the rotating electrical machine 1. Note that, in the example shown in FIG. 4, the refrigerant channel 300 has a plurality of channel parts SC1 to SC4 in a circumferential direction, but the refrigerant channel 300 can be arbitrarily configured.

The channel forming member 90 may be formed of a material having good thermal conductivity, such as aluminum, for example In the present embodiment, as an example, the channel forming member 90 is fitted to a stator core 12 of the stator 11 by shrink-fitting, for example. Note that, in another embodiment, the channel forming member 90 may be integrally formed with the stator core 12 by casting or the like.

In the present embodiment, as an example, as shown in FIG. 3A, the channel forming member 90 is in a form of the inner case fastened to the case 2. In this case, an axially one end side of the channel forming member 90 may have a plurality of fastening parts 500 as shown in FIG. 3A. The plurality of fastening parts 500 are fastened to the case 2 by bolts (not shown) (refer to bolt holes BT4). Note that, in a modification, the channel forming member 90 may be formed as a part of the case 2.

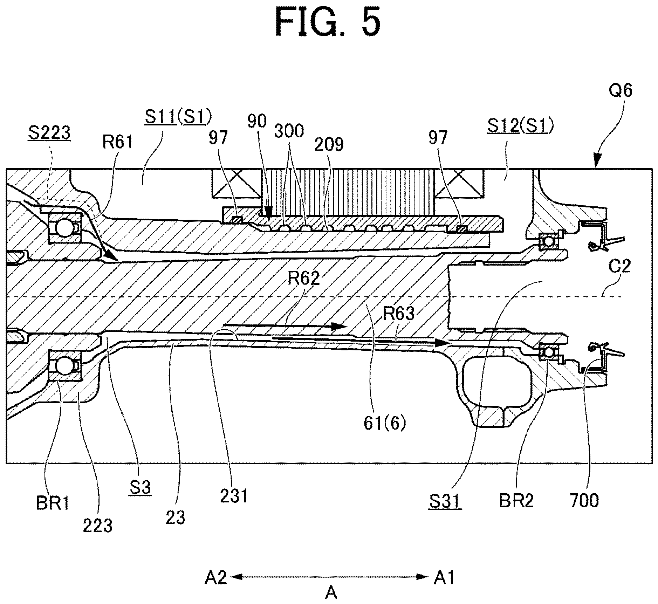

The channel forming member 90 is inserted into a space having a columnar shape in the case 2. At this time, an outer peripheral surface of the channel forming member 90 radially faces an inner peripheral surface (inner peripheral surface that bounds the plurality of fastening parts 500) of the case 2. Note that, hereinafter, an inner peripheral surface of the case 2 surrounding the channel forming member 90 in this manner is also referred to as a "channel forming surface 209 of the case 2" (refer to FIG. 5). Note that an inner diameter of the channel forming surface 209 of the case 2 may be a constant value larger by a base thickness of the channel forming member 90 than a base outer diameter of the stator core 12.

The channel forming member 90 cooperates with the channel forming surface 209 of the case 2 to form the refrigerant channel 300. Specifically, the refrigerant channel 300 is formed between the outer peripheral surface of the channel forming member 90 and the channel forming surface 209 of the case 2 in a radial direction.

The refrigerant channel 300 may extend in a circumferential direction such that the cooling water flows across the circumferential direction overall. Furthermore, the refrigerant channel 300 may be formed so as to radially face the outer peripheral surface of the stator core 12 across the axial direction overall of the stator core 12 of the rotating electrical machine 1. Note that the refrigerant channel 300 is closed at both axial ends. For example, between the channel forming member 90 and the channel forming surface 209 of the case 2, seal members 97 (refer to FIG. 5) may be provided over the entire circumferential direction at both axial end portions of the channel forming member 90.

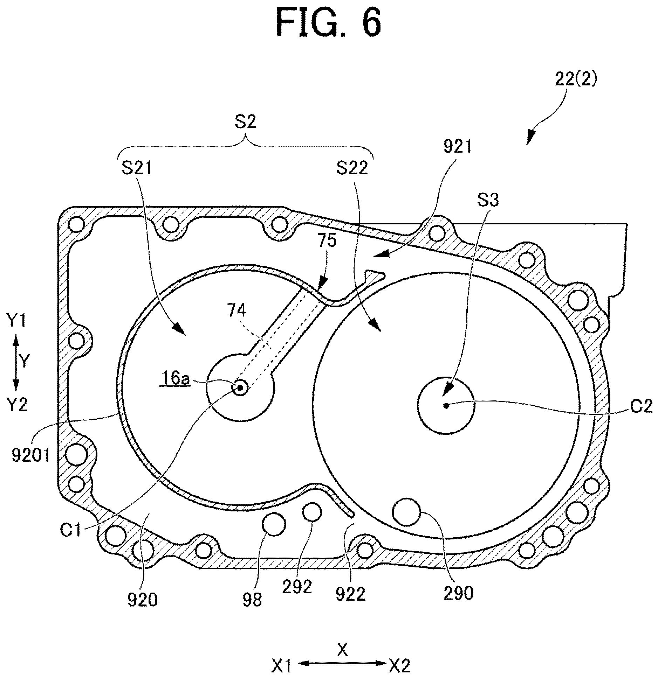

Next, an oil passage structure of the vehicular drive device 100 according to the present embodiment and components related thereto will be described with reference to FIGS. 5 and 6. Each oil passage according to the oil passage structure described below is formed by the case 2 unless otherwise specified. In the present specification, various oil passages formed by the case 2 are a concept including not only an oil passage formed by the case 2 alone but also an oil passage formed by a combination of the case 2 and another component (component other than the case 2). Furthermore, a housing chamber such as an output shaft housing chamber S3 also constitutes an oil passage.

FIG. 5 is a cross-sectional view taken along a plane passing through the second axis C2 and the Y direction, and is an enlarged view of a portion Q6 in FIG. 2 (a cross-sectional view passing through the output shaft housing chamber S3). FIG. 6 is a side view from the axial direction second side A2, schematically showing the vehicular drive device 100 according to the present embodiment.

Note that, as described above, the transmission mechanism housing chamber S2 and the output shaft housing chamber S3 overlap the second axis C2 as viewed from top and are adjacent to each other in the axial direction. Furthermore, because the transmission mechanism housing chamber S2 extends in the X direction in such a manner as to house the deceleration mechanism 34 and the differential gear mechanism 5, the transmission mechanism housing chamber S2 and the output shaft housing chamber S3 extend in an L shape as viewed from top. Hereinafter, of a transmission mechanism housing chamber S2, a part housing the deceleration mechanism 34 is also referred to as a "deceleration mechanism housing chamber S21", and a part housing the differential gear mechanism 5 is also referred to as a "differential gear housing chamber S22".

The output shaft case part 23 extends around the second axis C2 along an extending direction (that is, the axial direction) of the first output member 61. The output shaft case part 23 may be in a form of a peripheral wall part that forms a space (the output shaft housing chamber S3) around the first output member 61. Note that, in this case, the output shaft case part 23 may extend radially outer side (X direction X2 side) of the rotating electrical machine 1, and may also form a part of the motor case part 21.

In the present embodiment, an axial direction second side A2 of the output shaft housing chamber S3 communicates with the transmission mechanism housing chamber S2 (in particular, the differential gear housing chamber S22). Furthermore, an object to be lubricated by oil is disposed on the axial direction first side A1 of the output shaft housing chamber S3. That is, an end portion of the axial direction first side A1 of the output shaft housing chamber S3 communicates with a space S31 in which the object to be lubricated by the oil is disposed. In the present embodiment, the object to be lubricated by the oil includes a bearing BR2 and an oil seal 700. The oil seal 700 is provided at an end portion on the axial direction first side A1 of the first output member 61, and seals between the first output member 61 and the case 2 oil tightly. Note that, in a modification, instead of the output shaft housing chamber S3 communicating with the space S31 in which the bearing BR2 and the oil seal 700 are disposed, the end portion of the axial direction first side A1 of the output shaft housing chamber S3 may include the space S31 (space in which the bearing BR2 and the oil seal 700 are disposed).

In the present embodiment, the oil is circulated in the vehicular drive device 100 not by a so-called force-fed lubrication system utilizing an oil pump (mechanical or electric oil pump) but by a lubrication method (natural lubrication system) in which the oil is scraped up and lubricated by rotation of a gear. However, in a modification, the oil pump may be used for some of the lubrication.

Specifically, in the present embodiment, a lubrication system is adopted in which various objects to be lubricated are scraped up by rotation of the output gear 30 (so-called a differential ring) of the differential gear mechanism 5.

In this manner, according to the present embodiment, by adopting such a natural lubrication system in the vehicular drive device 100, oil pump is eliminated by which cost reduction and size reduction are achieved.

On the other hand, with the natural lubrication system, in order to appropriately supply the oil to the bearing BR2 and the oil seal 700 by the natural lubrication method, it is likely to be necessary to increase an oil level or to provide an additional component such as a catch tank. Note that, in order to increase the oil level, an amount of oil required increases, leading to an increase in cost.

Accordingly, in the present embodiment, axial direction first sides A1 of a surface 231 (hereinafter, also referred to as "peripheral wall inner peripheral surface 231") of the output shaft case part 23 (refer to FIG. 5), the surface 231 facing the first output member 61, and an outer peripheral surface of the first output member 61 extend to a position lower than axial direction second sides A2 thereof.

Specifically, the peripheral wall inner peripheral surface 231 includes a tilted surface that forms a height difference between the axial direction first side A1 and the axial direction second side A2. Such a tilted surface may be implemented by increasing an inner diameter (inner diameter around the first axis C1) of the peripheral wall inner peripheral surface 231 toward the axial direction first side A1. However, in another embodiment, a step may be formed instead of or in addition to the tilted surface. In this case also, the step may be formed such that the inner diameter (inner diameter around the first axis C1) of the peripheral wall inner peripheral surface 231 gradually increases toward the axial direction first side A1.

Furthermore, similarly, the outer peripheral surface of the first output member 61 includes a tilted surface that forms a height difference between the axial direction first side A1 and the axial direction second side A2. Such a tilted surface may be implemented by increasing an outer diameter (outer diameter around the first axis C1) of the outer peripheral surface of the first output member 61 toward the axial direction first side A1. In this case, the outer diameter of the outer peripheral surface of the first output member 61 may be smaller by a constant value than the inner diameter of the peripheral wall inner peripheral surface 231 at each position along the axial direction. However, in another embodiment, a step may be formed instead of or in addition to the tilted surface.

Such a peripheral wall inner peripheral surface 231 and an outer peripheral surface of the first output member 61 can have a function of causing oil supplied from the axial direction second side A2 by the rotation of the output gear 30 of the differential gear mechanism 5 to flow toward the axial direction first side A1 along the tilted surface at a relatively large flow rate by utilizing the action of gravity. Specifically, the oil (refer to the arrow R61 in FIG. 5) supplied from the axial direction second side A2 by the rotation of the output gear 30 of the differential gear mechanism 5 falls on a surface of the first output member 61, and then flows to the axial direction first side A1 along the surface of the first output member 61 (refer to the arrow R62 in FIG. 5). At this time, a flow of the oil toward the axial direction first side A1 is promoted due to a tilt of the surface of the first output member 61. Furthermore, the oil (refer to the arrow R61 in FIG. 5) supplied from the axial direction second side A2 by the rotation of the output gear 30 of the differential gear mechanism 5 falls on an upward-facing surface part of the peripheral wall inner peripheral surface 231 directly or via the surface of the first output member 61. Thereafter, the oil flows toward the axial direction first side A1 along the upward-facing surface part of the peripheral wall inner peripheral surface 231 (refer to the arrow R63 in FIG. 5). At this time, the flow of the oil toward the axial direction first side A1 is promoted due to a tilt of the peripheral wall inner peripheral surface 231. As a result, the oil can be supplied at an appropriate flow rate to an object to be lubricated (the bearing BR2 and the oil seal 700) provided at or in vicinity of the end portion on the axial direction first side A1 of the first output member 61.

In this manner, according to the present embodiment, the oil scraped up by the rotation of the output gear 30 of the differential gear mechanism 5 can be appropriately supplied to the object to be lubricated (the bearing BR2 and the oil seal 700), without providing an additional component such as a catch tank. Therefore, it is possible to appropriately supply the oil to the object to be lubricated (the bearing BR2 and the oil seal 700) located at a position relatively far from the output gear 30 of the differential gear mechanism 5 in the axial direction while achieving miniaturization and cost reduction by the natural lubrication system.

In the present embodiment, a portion of the transmission mechanism case part 22 has a cavity part S223 (refer to FIG. 5). The portion is positioned on a border adjacent to the output shaft case part 23 in the axial direction (hereinafter, also referred to as a "bearing support part 223"). Note that the bearing support part 223 is a part positioned around the bearing BR1 and supports the bearing BR1. In this case, the cavity part S223 may be formed radially outer side the bearing BR1 and at a height at which oil scraped up by the rotation of the output gear 30 of the differential gear mechanism 5 is applied to the cavity part S223. Note that two or more cavity parts S223 may be provided around the bearing BR1, for example, at a top of the bearing BR1 in the up-down direction (12:00 position) and at a position lower than the top (for example, 11:00 position).

By providing such a cavity part S223, it is possible to introduce the oil scraped up by the rotation of the output gear 30 of the differential gear mechanism 5, from the axial direction second side A2 into the output shaft housing chamber S3 at an appropriate flow rate. Furthermore, the oil scraped up by the rotation of the output gear 30 of the differential gear mechanism 5 can be directly introduced into the cavity part S223. Therefore, it is possible to introduce the oil into the output shaft housing chamber S3 from the axial direction second side A2 at an appropriate flow rate without providing an additional component such as a catch tank.

In the present embodiment, as shown in FIGS. 2 and 5, the oil supplied to the motor housing chamber S1 and the output shaft housing chamber S3 and used for lubrication or the like is returned to the transmission mechanism housing chamber S2 (in particular, the differential gear housing chamber S22) via a return channel 290 formed in the lower portion of the case 2.

Of the return channel 290, an end portion on the axial direction second side A2 is opened to the differential gear housing chamber S22, and an end portion on the axial direction first side A1 communicates with the output shaft housing chamber S3. The output shaft case part 23 may have an opening or a notch 99 (refer to FIG. 3A) for ensuring communication between the output shaft housing chamber S3 and the return channel 290. Thus, the oil can be efficiently introduced from the output shaft housing chamber S3 into the return channel 290.

Next, a structure in the transmission mechanism housing chamber S2 of the oil passage structure will be mainly described with reference to FIG. 6.

In the present embodiment, because the natural lubrication system is adopted as described above, it is useful to relatively quickly return the oil used for lubrication of various objects to be lubricated, to a lower portion (an oil sump in which the output gear 30 is immersed) in the differential gear housing chamber S22. For example, in a case where a return channel such as the return channel 290 described above is opened to the deceleration mechanism housing chamber S21 other than the differential gear housing chamber S22 in the transmission mechanism housing chamber S2, the oil returning to the lower portion in the differential gear housing chamber S22 via the return channel tends to be insufficient. In this case, depending on a traveling state of the vehicle, an oil temperature sensor may not be immersed in the oil, and an internal air temperature may be measured. In order to eliminate such inconvenience, it is possible to increase an overall amount of the oil. In this case, however, there may be such problems as an increase in cost due to the increase in the oil amount, an increase in churning loss due to an increase in the oil level in a static state (churning loss by the output gear 30), and the like.

Accordingly, in the present embodiment, the return channel 290 is opened at a lower portion (below the second axis C2) of the differential gear housing chamber S22 of the transmission mechanism housing chamber S2. At this time, the end portion on the axial direction second side A2 of the return channel 290 (opening on a differential gear housing chamber S22 side) preferably overlaps the output gear 30 as viewed in the axial direction. Thus, it is possible to relatively quickly return the oil used for lubrication of various objects to be lubricated, including the bearing BR2, the oil seal 700, and the like described above, to a lower portion (an oil sump in which the output gear 30 is immersed) in the differential gear housing chamber S22.

In the present embodiment, as described above, the channel forming member 90 is provided on the radially outer side of the rotating electrical machine 1. A radially inner side of the channel forming member 90 is fitted to the stator core 12, and a radially outer side of the channel forming member 90 is sealed on both sides in the axial direction with respect to the channel forming surface 209 of the case 2. That is, the channel forming member 90 is provided to partition movement of the oil between a space S11 (refer to FIG. 2) in which a coil end 13 on the axial direction second side A2 (in the present embodiment, a coil end 13-1 on a lead side) in the motor housing chamber S1 is positioned, and a space S12 (refer to FIG. 2) in which a coil end 13 on the axial direction first side A1 in the motor housing chamber S1 is positioned. Therefore, the space S11 (refer to FIG. 2) in which the coil end 13 on the axial direction second side A2 (in the present embodiment, the coil end 13-1 on the lead side) in the motor housing chamber S1 is positioned, and the space S12 (refer to FIG. 2) in which the coil end 13-2 on the axial direction first side A1 in the motor housing chamber S1 is positioned do not substantially communicate with each other in the axial direction. That is, because the refrigerant channel 300 is formed over the entire circumferential direction of the rotating electrical machine 1, and there is no gap between the rotating electrical machine 1 and the channel forming member 90 in the radial direction, movement of the oil passing through the gap (movement between the space S11 and the space S12)does not occur. Therefore, the oil ejected toward each coil end 13 through a shaft center oil passage 15a of a rotor shaft 15 and an ejection vent 15b in the radial direction of the rotor shaft 15 (oil ejected by centrifugal force during rotation of the rotor) cannot be returned to the transmission mechanism housing chamber S2 only through one return channel. Specifically, the oil jetted to the coil end 13 in the space S12 can return to the transmission mechanism housing chamber S2 (in particular, the differential gear housing chamber S22) through the return channel 290 described above, by communication between the space S12 and the output shaft housing chamber S3 (refer to FIG. 2). On the other hand, substantially, the oil jetted to the coil end 13 in the space S11 cannot return to the transmission mechanism housing chamber S2 (in particular, the differential gear housing chamber S22) through the return channel 290 described above.

Accordingly, in the present embodiment, a return channel 292 that allows the space S11 and the transmission mechanism housing chamber S2 to communicate with each other is provided as a second return channel. Specifically, of the return channel 292, an end portion on the axial direction first side A1 communicates with the space S11 of the motor housing chamber S1, and the end portion on the axial direction second side A2 communicates with a lower portion of the transmission mechanism housing chamber S2 (lower portion of the catch tank 920 described later). In the present embodiment, the end portion on the axial direction second side A2 of the return channel 292 is opened to a lower portion (below the first axis C1) of the deceleration mechanism housing chamber S21. At this time, the end portion on the axial direction second side A2 of the return channel 292 (an opening on a deceleration mechanism housing chamber S21 side) is preferably opened at a position below the second axis C2. Thus, the oil used for cooling the coil end 13 in the space S11 as described above can be returned to the lower portion (the oil sump in which the output gear 30 is immersed) in the differential gear housing chamber S22 via the deceleration mechanism housing chamber S21. In other words, it is possible to efficiently return the oil supplied into the motor housing chamber S1 to the lower portion (the oil sump in which the output gear 30 is immersed) in the differential gear housing chamber S22, while implementing the water-cooling structure with the channel forming member 90, around the stator core 12.

Note that, in the present embodiment, the end portion on the axial direction second side A2 of the return channel 292 (the opening on the deceleration mechanism housing chamber S21 side) is disposed in a catch tank 920 in the deceleration mechanism housing chamber S21. Note that, as shown in FIG. 6, the return channel 292 may be in a form of a hole axially penetrating the partition wall part that partitions in the axial direction the motor housing chamber S1 and transmission mechanism housing chamber S2 in the case 2.

As shown in FIG. 6, in the deceleration mechanism housing chamber S21, the catch tank 920 extends radially outer side of a wall part 9201 in the axial direction around the deceleration mechanism 34, and has an inlet 921 at a position where oil scraped up by the rotation of the output gear 30 can be caught. Then, the catch tank 920 has a discharge port 922 opened to the differential gear housing chamber S22 at a lower portion. In this case, an end portion of a return channel 292 on the axial direction second side A2 (an opening on a deceleration mechanism housing chamber S21 side) may be provided in vicinity of the discharge port 922. Thus, the oil used for cooling the coil end 13 in the space S11 as described above can be relatively quickly returned to the lower portion (the oil sump in which the output gear 30 is immersed) in the differential gear housing chamber S22 via a lower portion of the catch tank 920. Note that the catch tank 920 may also communicate with a shaft center oil passage 15a of a rotor shaft 15 so as to supply oil to the shaft center oil passage 15a of the rotor shaft 15, and the like. Furthermore, the lower portion of the catch tank 920 represents a portion below a center of the catch tank 920 in the up-down direction, and refers to, for example, a portion below the first axis C1.

Note that, in a modification, the return channel 292 may be connected to the return channel 290 described above. For example, the return channel 292 may be formed as a channel through which the space S11 and the return channel 290 communicate with each other. In this case, a length of the return channel as a whole can be reduced, implementing an efficient return channel configuration.

An oil temperature sensor 98 (disposition thereof is schematically shown by a circle in FIG. 6) is provided at a lower portion of the catch tank 920. In this case, the oil temperature sensor 98 is provided in vicinity of the discharge port 922 of the catch tank 920. Thus, the oil temperature sensor 98 is less likely to be above an oil level depending on a traveling state of a vehicle, and therefore, reliability of sensor information from the oil temperature sensor 98 can be enhanced.

In this manner, in the present embodiment, as described above, the oil scraped up by the rotation of the output gear 30 of the differential gear mechanism 5 is introduced from the transmission mechanism housing chamber S2 to the output shaft housing chamber S3 via the cavity part S223 at a position upper than the second axis C2. Then, while flowing downward by gravity, the oil lubricates the bearing BR2 and the like. Then, the oil returns from the output shaft housing chamber S3 to the differential gear housing chamber S22 via an end portion (the end position on the axial direction second side A2) of the return channel 290 at a position lower than the second axis C2. Thus, the rotation of the output gear 30 of the differential gear mechanism 5 can scrape up the oil again.

Furthermore, the oil scraped up by the rotation of the output gear 30 of the differential gear mechanism 5 is introduced into the shaft center oil passage 15a of the rotor shaft 15 via the catch tank 920. Specifically, a communication port 75 is provided at an upper portion of the catch tank 920. The communication port 75 is an opening on a radially outer side of a communication path 74 in the radial direction, and an end portion on a radially inner side of the communication path 74 is connected to a shaft center oil passage 16a of the input member 16. In this case, the oil scraped up by the rotation of the output gear 30 of the differential gear mechanism 5 enters from the communication port 75 of the catch tank 920 to the communication path 74, and then is supplied into the shaft center oil passage 15a of the rotor shaft 15 via the shaft center oil passage 16a. As described above, the oil supplied to the shaft center oil passage 15a is ejected from an ejection vent 15b to the coil end 13 of the rotating electrical machine 1. Thus, the coil end 13 can be efficiently cooled by the oil scraped up by the rotation of the output gear 30 of the differential gear mechanism 5. Then, the oil ejected to the coil end 13 in a space S12 of the motor housing chamber S1 is returned from the space S12 to the transmission mechanism housing chamber S2 via the end portion (the end portion on the axial direction second side A2) of the return channel 290 at the position lower than the second axis C2. Furthermore, the oil ejected to the coil end 13 in a space S11 of the motor housing chamber S1 is returned from the space S11 to the transmission mechanism housing chamber S2 via the end portion (the end portion on the axial direction second side A2) of the return channel 292 at the position lower than the second axis C2. The oil returned to the transmission mechanism housing chamber S2 in this manner is returned to the differential gear housing chamber S22 from the discharge port 922 below the second axis C2 in the catch tank 920. Thus, the rotation of the output gear 30 of the differential gear mechanism 5 can scrape up the oil again.

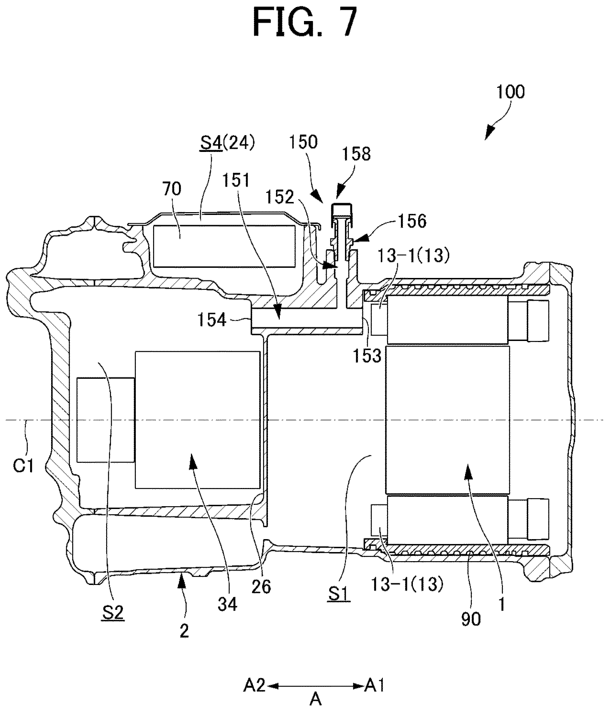

Next, a preferable disposition of a breather 150 in the present embodiment will be described in detail with, for example, reference to FIGS. 3 and 7.

FIG. 7 is a schematic cross-sectional view of the vehicular drive device 100, taken along a vertical plane passing through the breather 150.

The breather 150 has a function of opening the motor housing chamber S1 and transmission mechanism housing chamber S2 formed by the case 2 of the vehicular drive device 100 to atmospheric pressure. The breather 150 is provided at an upper portion of the case 2 so that oil (for example, oil accumulated in a lower portion) in the case 2 is unlikely to intrude when, for example, vehicle behavior changes.

Specifically, as shown in FIG. 7, the breather 150 includes a first passage 151 extending in the axial direction A and a second passage 152 extending in the up-down direction, as a portion mainly forming the breather chamber. The first passage 151 has both ends opened, and forms a first opening 153 opened to the motor housing chamber S1 and a second opening 154 opened to the transmission mechanism housing chamber S2. The second passage 152 has a lower end connected (opened) to the first passage 151 and an upper end forming a third opening 156 opened to atmosphere. Note that a breather valve 158 may be attached to the third opening 156. A detailed configuration of the breather valve 158 is arbitrary. However, for example, the content may be incorporated in the present application by reference here the breather valve may have a configuration as disclosed in JP 2007-127139 A.

According to such a configuration, the breather 150 can be opened to the inside of the motor housing chamber S1 to the atmospheric pressure through the first opening 153 and third opening 156 opened in the motor housing chamber S1. Furthermore, the breather 150 can be opened to the inside of the transmission mechanism housing chamber S2 to the atmospheric pressure through the second opening 154 and third opening 156 opened in the transmission mechanism housing chamber S2. Therefore, an efficient configuration can be implemented as compared with a configuration in which a breather for the motor housing chamber S1 and a breather for the transmission mechanism housing chamber S2 are separately provided.

In the present embodiment, as can be seen from a position of the breather valve 158 shown in FIG. 3, the third opening 156 is disposed near a central portion of the case 2 as viewed in the up-down direction. Specifically, the third opening 156 is disposed between the first axis C1 and the second axis C2 in the first direction X (an example of a direction perpendicular to a first axis) and between a center position of the rotating electrical machine 1 and a center position of the deceleration mechanism 34 in the axial direction A (an example of a direction parallel to the first axis). Note that the center position of the rotating electrical machine 1 in the axial direction A may correspond to, for example, a center position of the stator core 12 in the axial direction. Furthermore, the center position of the deceleration mechanism 34 in the axial direction A may correspond to an intermediate position between a position closest to the axial direction first side A1 of the deceleration mechanism 34 and a position closest to the axial direction second side A2 of the deceleration mechanism 34.

According to such a disposition of the breather 150, it is possible to easily establish the breather 150 by utilizing a dead space which easily formed, between the rotating electrical machine 1 and the deceleration mechanism 34 and between the first axis C1 and the second axis C2, in the axial direction A.

In particular, the third opening 156 is preferably disposed on the axial direction second side A2 with respect to a coil end 13-1 on the axial direction second side A2 (that is, a side closer to the deceleration mechanism 34). This is because a dead space as denoted by Q1 in FIG. 2 is easily formed on the axial direction second side A2 with respect to the coil end 13-1 on the axial direction second side A2. Note that an area denoted by Q1 in FIG. 2 is a part of such a dead space, and is positioned between the bearing BR3 and the bearing BR1 in the first direction X.

Incidentally, in the present embodiment, as described above, the inverter housing chamber S4 (inverter case part 24) forms the upper portion of the case 2 and extends in a relatively wide area.

Accordingly, in the present embodiment, as can be seen from a position of the breather valve 158 shown in FIG. 3, the third opening 156 is disposed at a position away from the inverter housing chamber S4 (inverter case part 24) as viewed in the up-down direction. In particular, in the present embodiment, the third opening 156 is disposed in vicinity of an L-shape corner of the inverter housing chamber S4. Thus, the third opening 156 of the breather 150 can be disposed near the central portion of the case 2 as viewed in the up-down direction, while the inverter housing chamber S4 as described above is established. In other words, according to the present embodiment, by forming the inverter housing chamber S4 in an L shape, the third opening 156 of the breather 150 can be disposed near the central portion of the case 2 as viewed in the up-down direction, while reducing a size of the vehicular drive device 100 in the up-down direction.

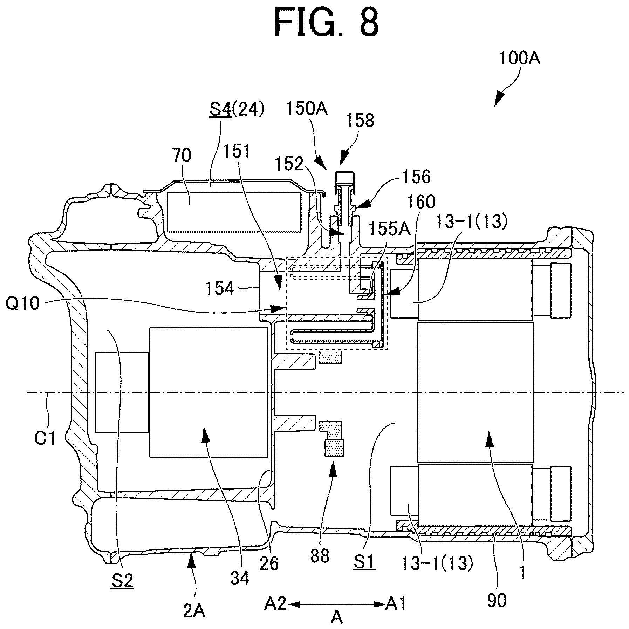

Next, another embodiment (hereinafter, also referred to as "second embodiment" for distinction) different from the above-described embodiment (hereinafter, also referred to as "first embodiment" for distinction) will be described with reference to FIG. 8 and subsequent drawings. Hereinafter, a configuration different from the configurations of the first embodiment described above will be mainly described with respect to the second embodiment. However, other configurations not described with respect to the second embodiment may be similar to those of the first embodiment described above.

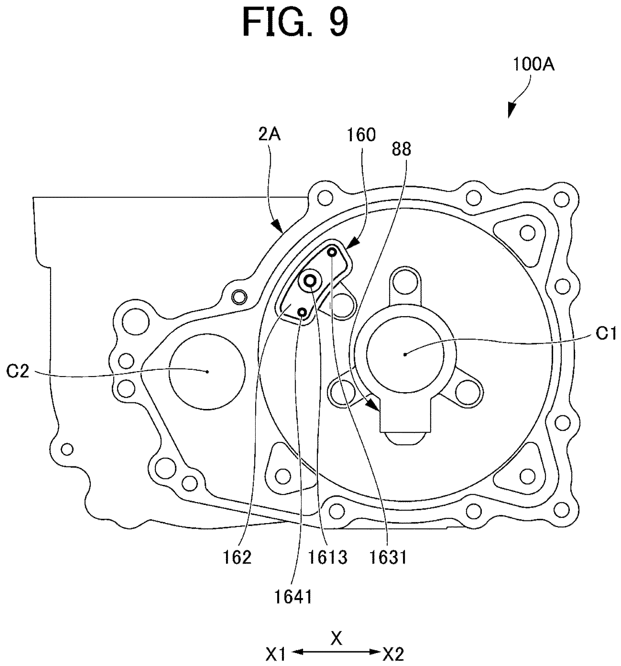

FIG. 8 is a schematic cross-sectional view of a vehicular drive device 100A, taken along a vertical plane passing through a breather 150A according to the present second embodiment. FIG. 9 is a side view from the axial direction first side A1, schematically showing a partition wall 26 in the vehicular drive device 100A according to the present second embodiment. In FIG. 9, a part of the configuration (the rotating electrical machine 1 and the like) in the motor housing chamber S1 is not shown for ease of viewing. Furthermore, in FIG. 9, a part (lid part 169) of an insulating member 160 described later is not shown for ease of viewing.

The vehicular drive device 100A according to the present second embodiment is different from the vehicular drive device 100 according to the first embodiment described above in that mainly the breather 150 is replaced with the breather 150A.

The breather 150A is different from the breather 150 according to the above-described first embodiment in a configuration on a motor housing chamber S1 side.

Specifically, the breather 150A has an opening 155A on the motor housing chamber S1 side formed by a case 2A, instead of the first opening 153 of the breather 150 according to the first embodiment described above. Unlike the breather 150 according to the first embodiment described above, the breather 150A is opened to the motor housing chamber S1 via the insulating member 160 that is a member different from the case 2A described later.

The insulating member 160 is formed by an insulating material (for example, a resin material) having an electrical insulating property, and forms an insulating part of breather 150A. That is, the breather 150A includes an insulating part formed by the insulating member 160 in addition to a conductor portion formed by the case 2A.

In the present second embodiment, the insulating member 160 forms the breather chamber of the breather 150A, together with the case 2A. Specifically, the breather chamber of the breather 150A includes a space formed by the insulating member 160 (an example of a second breather chamber), in addition to a space related to the first passage 151 and second passage 152 formed by the case 2A (an example of a first breather chamber).

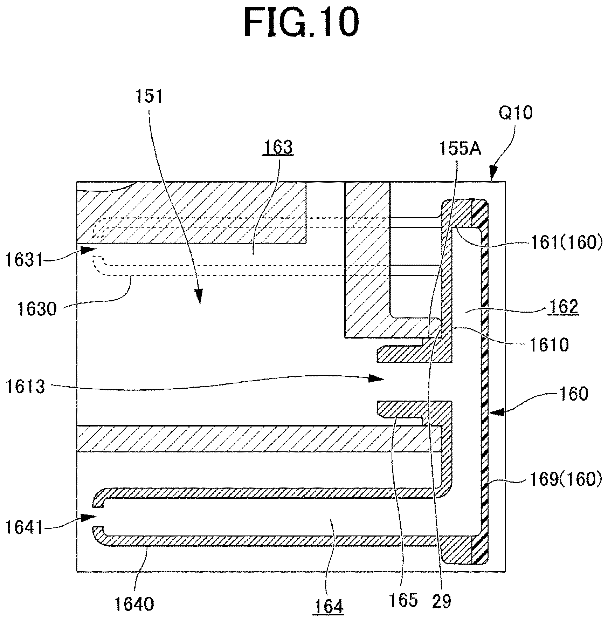

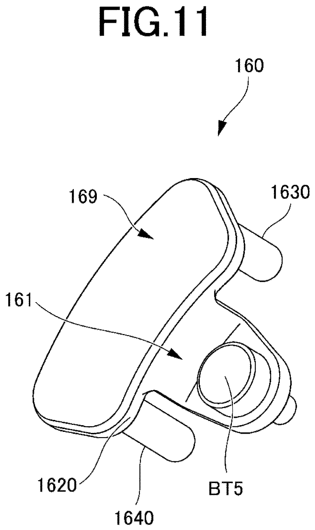

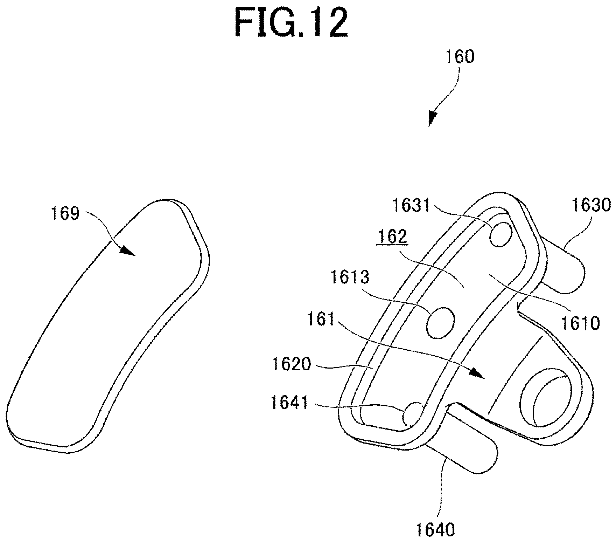

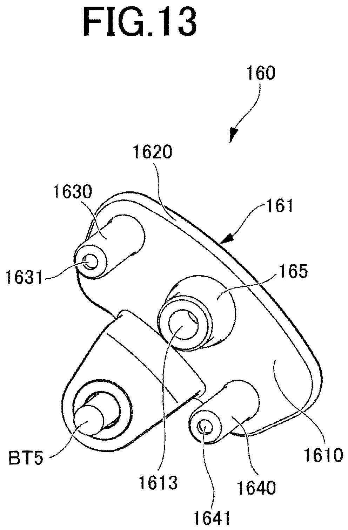

FIGS. 10 to 12 are explanatory views of the insulating member 160. FIG. 10 is an enlarged view of a portion Q10 in FIG. 8. FIG. 11 is a perspective view of a state of the insulating member 160 as a single part, as viewed from the axial direction first side A1. FIG. 12 is an exploded perspective view of the insulating member 160 in FIG. 11. FIG. 13 is a perspective view of a state of the insulating member 160 as a single part, as viewed from the axial direction second side A2.

The insulating member 160 is attached to the partition wall 26 of the case 2A so as to be positioned in the motor housing chamber S1. Note that a method for attaching the insulating member 160 is arbitrary, but the insulating member 160 may be fastened to the partition wall 26 by, for example, a bolt hole BT5 (refer to FIG. 11) or the like.

The insulating member 160 includes a main body part 161 and the lid part 169.

The main body part 161 forms a common passage 162 overlapping the first passage 151 as viewed in the axial direction A. An axial dimension of the common passage 162 may be relatively small. The main body part 161 has an outer peripheral wall part 1620 that bounds the common passage 162 as viewed in the axial direction. The outer peripheral wall part 1620 is formed to project from an outer peripheral edge of a main wall part 1610 of the main body part 161 toward the axial direction first side A1. The main wall part 1610 of the main body part 161 extends in a plane substantially perpendicular to the axial direction A.

The main body part 161 forms the common passage 162 so as to communicate with the first passage 151. Specifically, the main wall part 1610 of the main body part 161 has a through hole 1613 in the axial direction A, and the common passage 162 communicates with the first passage 151 via the through hole 1613. In the present second embodiment, the through hole 1613 is formed on an inner peripheral side of a cylindrical fitting part 165. The cylindrical fitting part 165 is formed on the axial direction first side A1 of the main wall part 1610 of the main body part 161. In this case, the insulating member 160 is fitted to the case 2A in such a manner that the cylindrical fitting part 165 is inserted into the first passage 151 through the opening 155A.

The main body part 161 further forms a ventilation passage 163 and a drain passage 164 as two passages communicating with the common passage 162. The main body part 161 includes a ventilation hollow projection part 1630 that bounds the ventilation passage 163 and a drain hollow projection part 1640 that bounds the drain passage 164.

The ventilation hollow projection part 1630 has a cylindrical shape and projects from the main wall part 1610 of the main body part 161 to the axial direction second side A2. The ventilation hollow projection part 1630 may project to the axial direction second side A2 so as to reach vicinity of the partition wall 26 in the axial direction A. The ventilation hollow projection part 1630 extends in the axial direction A, is connected to the main wall part 1610 on the axial direction first side A1, and is opened on the axial direction second side A2. Therefore, the ventilation passage 163 formed by the ventilation hollow projection part 1630 communicates with the common passage 162 on the axial direction first side A1 and communicates with (is opened to) the motor housing chamber S1 on the axial direction second side A2. The opening on the axial direction second side A2 in the ventilation hollow projection part 1630 forms a vent hole 1631. The ventilation hollow projection part 1630 is preferably provided at a relatively high position. For example, the ventilation hollow projection part 1630 is provided above the through hole 1613, and is provided at a highest position of the common passage 162 as viewed in the axial direction A (refer to the vent hole 1631 in FIG. 9). Thus, it is possible to effectively reduce possibility of oil intruding the ventilation passage 163.

The drain hollow projection part 1640 has a cylindrical shape and projects from the main wall part 1610 of the main body part 161 to the axial direction second side A2. The drain hollow projection part 1640 may project to the axial direction second side A2 so as to reach vicinity of the partition wall 26 in the axial direction A. The drain hollow projection part 1640 extends in the axial direction A, is connected to the main wall part 1610 on the axial direction first side A1, and is opened on the axial direction second side A2. Therefore, the drain passage 164 formed by the drain hollow projection part 1640 communicates with the common passage 162 on the axial direction first side A1 and communicates with (is opened to) the motor housing chamber S1 on the axial direction second side A2. The opening on the axial direction second side A2 in the drain hollow projection part 1640 forms a drain hole 1641. The drain hollow projection part 1640 is provided at a relatively low position. For example, the drain hollow projection part 1640 is provided below the through hole 1613, and is provided at a lowest position of the common passage 162 as viewed in the axial direction A (refer to the drain hole 1641 in FIG. 9). Thus, the oil that has intruded the breather 150A can be returned from the drain passage 164 to the motor housing chamber S1 without shortage.

The lid part 169 is provided so as to cover the axial direction first side A1 of the common passage 162. Therefore, the lid part 169 is coupled to the main body part 161 so as to be in contact with an end surface of the axial direction first side A1 of the outer peripheral wall part 1620. A method for coupling the lid part 169 to the main body part 161 is arbitrary, and may be achieved by, for example, fitting, bonding, or the like. Furthermore, a seal member (not shown) may be provided between the main body part 161 and the lid part 169, but the seal member is preferably omitted to reduce the number of components.

In this manner, because the insulating member 160 includes the main body part 161 and the lid part 169, a new breather chamber (a breather chamber different from a space formed by the case 2A) can be formed by the common passage 162, the ventilation passage 163, and the drain passage 164. Thus, it is easy to secure necessary capacity of the breather chamber as the entire breather 150A.

Furthermore, because the insulating member 160 forms the ventilation passage 163 by the ventilation hollow projection part 1630, capacity of the ventilation passage 163 can be relatively increased by an axial length of the ventilation hollow projection part 1630. A similar applies to the drain passage 164. Therefore, it is easier to secure necessary capacity of the breather chamber as the entire breather 150A. Furthermore, because the insulating member 160 can be formed of a resin material or the like, a space formed by the insulating member 160 is highly flexible in shape, unlike the space formed by the case 2A. Therefore, the ventilation hollow projection part 1630 and the drain hollow projection part 1640 can be formed with a relatively high flexibility in shape.

Incidentally, in the motor housing chamber S1, oil (for example, oil jetted through the ejection vent 15b) scatters due to rotation of the rotor 14 of the rotating electrical machine 1 or the like. Therefore, oil is likely to be applied to the breather 150A disposed in vicinity of the rotating electrical machine 1, and thus oil is likely to intrude the breather chamber.

In this regard, in the present second embodiment, the ventilation hollow projection part 1630 and the drain hollow projection part 1640 are positioned on the axial direction second side A2 with respect to the main wall part 1610 as described above. For example, that is, the ventilation hollow projection part 1630 and the drain hollow projection part 1640 are positioned on the axial direction second side A2 with respect to an axial position closest to the axial direction first side A1 in the first passage 151. Thus, it is possible to effectively reduce possibility of oil intruding into the breather chamber through the vent hole 1631 or the drain hole 1641. In particular, in a case where the ventilation hollow projection part 1630 and the drain hollow projection part 1640 extend to the vicinity of the partition wall 26 in the axial direction A, the it is possible to significantly reduce possibility of oil intruding into the breather chamber through the vent hole 1631 or the drain hole 1641.

Furthermore, in the present second embodiment, the breather 150A can be disposed between the partition wall 26 and the rotating electrical machine 1 so as to avoid a rotation angle sensor 88 in the axial direction. That is, the breather 150A can be disposed by efficiently utilizing a dead space between the partition wall 26 and the rotating electrical machine 1 in the axial direction. Specifically, as shown in FIG. 8, the ventilation hollow projection part 1630 and the drain hollow projection part 1640 extend to the axial direction second side A2 with respect to the rotation angle sensor 88 in the axial direction. That is, disposition areas of the ventilation passage 163 and the drain passage 164 overlap each other in the axial direction, with respect to the rotation angle sensor 88. Thus, it is possible to efficiently increase the capacity of the breather chamber of the breather 150A while disposing the breather 150A together with the rotation angle sensor 88 between the partition wall 26 and the rotating electrical machine 1 in the axial direction. Note that, in the present second embodiment, the rotation angle sensor 88 is in a form of, for example, a resolver, but may be in another form.

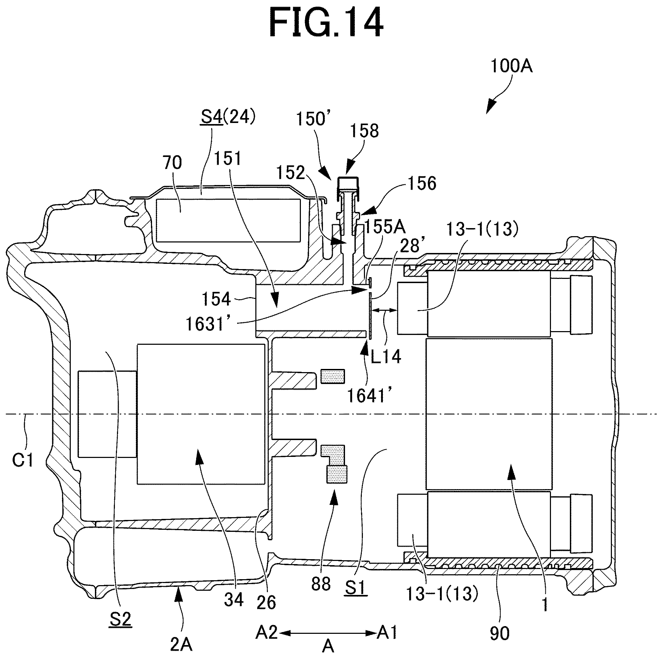

Next, a further effect of the present second embodiment will be described in comparison with a comparative example shown in FIG. 14.

FIG. 14 is a schematic cross-sectional view of a vehicular drive device 100A according to the comparative example, taken along a vertical plane passing through a breather 150'.

A breather 150' according to the comparative example is different from the breather 150A according to the present second embodiment in that the insulating member 160 is replaced with a lid member 28' made of metal.

The lid member 28' is formed of, for example, a material (for example, aluminum) similar to the case 2A. The lid member 28' is in a form of a flat plate and covers the opening 155A on the axial direction first side A1 in the first passage 151. Note that the lid member 28' may form the drain hole 1641' and the vent hole 1631'.

Here, in the comparative example and the present the present second embodiment, the first passage 151 faces the coil end 13-1 as viewed in the axial direction A. Therefore, if the first passage 151 is extended to the axial direction first side A1, an electrical insulation distance between the coil end 13-1 and an end portion on the axial direction first side A1 in the case 2A (specifically, an outer peripheral edge portion around the first passage 151) is shortened. Therefore, due to necessity (restriction) of securing a necessary electrical insulation distance between the coil end 13-1 and the end portion on the axial direction first side A1 of the case 2A, it is difficult to increase the capacity of the breather chamber by extending the first passage 151 to the axial direction first side A1.

Note that, in the comparative example, the lid member 28' is a conductor axially facing the coil end 13-1. Therefore, the lid member 28' is disposed away from the coil end 13-1 by a necessary electrical insulation distance L14 (refer to FIG. 14) or more.

Meanwhile, according to the present second embodiment, the insulating member 160 described above is provided so as to cover a portion 29 (a portion of the partition wall 26) around the first passage 151 in the case 2A. Thus, the insulating member 160 is positioned between the portion 29 around the first passage 151 in the case 2A and the coil end 13-1. As a result, it is possible to enhance electrical insulation between the coil end 13-1 and the end portion on the axial direction first side A1 in the case 2A (the portion 29 around the first passage 151). In other words, the above-described insulating member 160 can be brought close to the coil end 13-1 while facing the coil end 13-1 in the axial direction. Thus, by bringing the insulating member 160 close to the coil end 13-1 (for example, by bringing the insulating member 160 close to a distance shorter than the insulation distance L14), the capacity of the breather chamber formed by the insulating member 160 (for example, capacity of the common passage 162) can be increased. In this manner, according to the present second embodiment, even in a case where the breather 150A is disposed at a position facing the coil end 13-1 in the axial direction, it is possible to secure necessary capacity of the breather chamber of the breather 150A while securing a necessary insulation distance to the coil end 13-1.

Note that, in the present second embodiment, the second opening 154 similar to the second opening 154 in the first embodiment described above is provided.

However, the second opening 154 may be omitted. That is, the breather 150A may not be opened to the transmission mechanism housing chamber S2.

Furthermore, in the present second embodiment, the third opening 156 similar to the third opening 156 in the first embodiment described above is provided. However, an opening (vent opening opened to the atmosphere) corresponding to the third opening 156 may be provided at a position different from a position of the third opening 156 in the first embodiment described above.

Furthermore, as a preferable configuration, the ventilation hollow projection part 1630 and the drain hollow projection part 1640 are provided in the second embodiment. However, either one or both of the ventilation hollow projection part 1630 and the drain hollow projection part 1640 may be omitted in the present second embodiment. For example, in a case where the ventilation hollow projection part 1630 is omitted, a vent hole may be provided on an upper side of the lid part 169.

Furthermore, in the present second embodiment, the vent hole 1631 of the breather 150A is opened to the motor housing chamber S1. However, the vent hole 1631 may be provided to be opened to the transmission mechanism housing chamber S2. In this case, the ventilation hollow projection part 1630 may be omitted, or a similar ventilation hollow projection part, which is different only in not having the vent hole 1631, may be provided. Even in the latter case, necessary capacity of the breather chamber of the breather 150A can still be efficiently secured.

Furthermore, in the present second embodiment, the drain hole 1641 of the breather 150A is opened to the motor housing chamber S1. However, the drain hole 1641 may be provided to be opened to the transmission mechanism housing chamber S2. In this case, the drain hollow projection part 1640 may be omitted, or a similar drain hollow projection part, which is different only in not having the drain hole 1641, may be provided. Even in the latter case, necessary capacity of the breather chamber of the breather 150A can still be efficiently secured.

Furthermore, in the present second embodiment, the rotating electrical machine 1 and the transmission mechanism 3 are provided, but either one may be omitted. For example, in a case where the rotating electrical machine 1 is omitted (for example, in a case where an engine is provided), an insulating member corresponding to the insulating member 160 may be provided on a second opening 154 side.

Although each embodiment has been described in detail above, the present invention is not limited to a specific embodiment, and various modifications and changes can be made within the scope described in the claims. Furthermore, all or a plurality of the components in the above-described embodiments can be combined.

Note that, regarding the above embodiments, the following are further disclosed.

In the conventional technique as described above, in a configuration in which oil flows also to a housing chamber (for example, a housing chamber housing a transmission mechanism) other than a motor housing chamber, a space dedicated to a breather chamber is separately required. Therefore, it is difficult to reduce a size of a vehicular drive device.

Accordingly, in one aspect, the invention according to the following supplementary note intends to eliminate or reduce an increase in size of a vehicular drive device caused by a breather.

### (Supplementary note 1)

A vehicular drive device including
a rotating electrical machine disposed with a first axis as an axial center,
a transmission mechanism that transmits drive force from the rotating electrical machine to a wheel, and includes a first transmission mechanism part disposed with the first axis as an axial center, and a second transmission mechanism part disposed with a second axis as an axial center, the second axis being parallel to the first axis,
a case that houses the rotating electrical machine and the transmission mechanism, and
a breather provided on the case, in which,
in the case, oil is able to move back and forth between a first housing chamber that houses the rotating electrical machine and a second housing chamber that houses the transmission mechanism,
the breather includes a first opening opened to the first housing chamber, a second opening opened to the second housing chamber, and a third opening opened to atmosphere,
the third opening is disposed, as viewed in an up-down direction, between the first axis and the second axis in a direction perpendicular to the first axis, and between a center position of the rotating electrical machine and a center position of the first transmission mechanism part in a direction parallel to the first axis.

### (Supplementary note 2)

The vehicular drive device according to supplementary note 1, in which
the rotating electrical machine includes a first coil end on a side close to the first transmission mechanism part in an axial direction, and a second coil end on a side far from the first transmission mechanism part in an axial direction, and
the third opening is closer to the first transmission mechanism part than the first coil end is in an axial direction, as viewed in an up-down direction.

### (Supplementary note 3)

The vehicular drive device according to supplementary note 1, further including
a first output member that is either one of a pair of output members each drivingly coupled between a pair of wheels and the transmission mechanism,
a first bearing that rotatably supports a rotor shaft of the rotating electrical machine, on a side close to the first transmission mechanism part in an axial direction, and
a second bearing that rotatably supports the first output member on a side close to the second transmission mechanism part in an axial direction, in which
the third opening is disposed between the first bearing and the second bearing in a direction perpendicular to the first axis, as viewed in an up-down direction.

### (Supplementary note 4)

The vehicular drive device according to any one of supplementary notes 1 to 3, further including an inverter device that receives power supply from a battery and supplies power to the rotating electrical machine, in which
the case further houses the inverter device, and
the third opening is disposed at a position far from the third housing chamber that houses the inverter device in the case, as viewed in an up-down direction.

### (Supplementary note 5)

The vehicular drive device according to supplementary note 3, further including an inverter device that receives power supply from a battery and supplies power to the rotating electrical machine, and includes a power module and a wiring part that electrically connects the rotating electrical machine and the power module, in which
the case further houses the inverter device,
a third housing chamber that houses the inverter device in the case overlaps the first transmission mechanism part, the second transmission mechanism part, and the first output member, as viewed in an up-down direction, and
the third opening is disposed at a position far from the third housing chamber, as viewed in an up-down direction, as viewed in an up-down direction.

### REFERENCE SIGNS LIST

100: Vehicular drive device, 1: Rotating electrical machine (drive source), 2: Case, 3: Transmission mechanism, 13-1: Coil end (coil end), 150A: Breather, 151: First passage (breather chamber, first breather chamber), 152: Second passage (breather chamber, first breather chamber), 156: Third opening (vent opening), 160: Insulating member, 162: Common passage (breather chamber, second breather chamber), 163: Ventilation passage (breather chamber, second breather chamber), 164: Drain passage (breather chamber, second breather chamber), 1631: Vent hole (Case-side opening), 1641: Drain hole (Case-side opening), and 88: Rotation angle sensor

## Claims

1. A vehicular drive device comprising:
a transmission mechanism that transmits drive force from a drive source to a wheel;
a case that forms a housing chamber that houses at least either the drive source or the transmission mechanism along with oil; and
a breather provided on the case, wherein
the breather includes
a case-side opening opened to the housing chamber,
a vent opening opened to atmosphere, and
a breather chamber that communicates with the case-side opening and the vent opening,
the breather chamber includes
a first breather chamber formed in the case, and
a second breather chamber, and
the second breather chamber is formed by an insulating member attached to the case in the housing chamber.

2. The vehicular drive device according to claim 1, wherein
the drive source includes a rotating electrical machine,
the housing chamber houses the rotating electrical machine, and
the insulating member is closer to the rotating electrical machine in an axial direction than the first breather chamber is, and faces the rotating electrical machine as viewed in the axial direction.

3. The vehicular drive device according to claim 2, wherein the insulating member further forms the case-side opening.

4. The vehicular drive device according to claim 2 or 3, wherein the case-side opening is positioned at an axial position farther from the rotating electrical machine than an axial position on a side closest to the rotating electrical machine in the first breather chamber.

5. The vehicular drive device according to claim 1, wherein
the drive source includes a rotating electrical machine,
a rotation angle sensor that creates sensor information related to a rotation angle of the rotating electrical machine is further provided,
the housing chamber houses the rotating electrical machine and the rotation angle sensor, and
disposition areas of the second breather chamber and the rotation angle sensor overlap each other in an axial direction.
